# FASCICULE DE BREVET EUROPEEN

(11) **EP 0 469 963 B1**
(45) Date de publication et mention de la délivrance du brevet: **29.03.1995**
(21) Numéro de dépôt: 91402063.1
(22) Date de dépôt: 24.07.1991
(51) Int. Cl.: H04N 7/10

(54) **Dispositif de distribution de signaux vidéo et/ou audio entre plusieurs récepteurs**
Vorrichtung zum Verteilen von Video- und/oder Audiosignalen zwischen mehreren Empfängern
Device for distributing video- and/or audiosignals among several receivers

(30) Priorité: 30.07.1990 FR 9009684
(43) Date de publication de la demande: 05.02.1992
(73) Titulaire: COMPAGNIE GENERALE DE VIDEOTECHNIQUE (C.G.V.), 67200 Strasbourg (FR)
(72) Inventeur: Grandmoujin Gérard, F-67200 Strasbourg (FR)
(74) Mandataire: Armengaud Ainé, Alain

(56) Documents cités:
- EP-A- 0 024 618
- EP-A- 0 326 205
- EP-A- 0 352 210
- DE-A- 3 831 994
- DE-B- 2 461 688
- GB-A- 2 166 328
- US-A- 2 974 188
- US-A- 4 077 006
- US-A- 4 337 480
- 15IEME COLLOQUE INTERNATIONAL DE TELEVISION JOINT SESSIONS ( BROADCAST AND CATV ), MONTREUX, 11-17 JUIN 1987, pages 165 - 173; J. HOFMANN: 'Cable,television, and the consumer electronic bus'
- IEEE TRANSACTIONS ON CONSUMER ELECTRONICS. vol. 32, no. 1, 28 Février 1986, NEW YORK US pages 1-7; R.HAMABE ET AL: 'A revised new proposal for standardization of home bus system for home automation'
- IEEE TRANSACTIONS ON CONSUMER ELECTRONICS. vol. 31, no. 3, 30 Août 1985, NEW YORK US pages 516 - 525; M.INOUE ET AL: 'A home automation system'
- IEEE TRANSACTIONS ON CONSUMER ELECTRONICS, "1988 INTERNATIONAL CONFERENCE ON CONSUMER ELECTRONICS, PART 1 " vol. 34, no. 3, 30 Août 1988, NEW YORK US pages 728 - 733; H. YAMAZAKI ET AL: 'A home video bus system'
- 1986 IEEE INTERNATIONAL CONFERENCE ON CONSUMER ELECTRONICS, DIGEST OF TECHNICAL PAPERS, 3-6 JUIN 1986 , SESSION XVI, NEW YORK, US pages 234 - 235; N. NAKATANI ET AL: 'A hybrid coax and twisted pair home bus'
- PATENT ABSTRACTS OF JAPAN vol. 12, no. 89 (E-592)(2936)23 Mars 1988 ( MATSUSHITA ELECTRIC WORKS LTD ) 30 Septembre 1987 & JP-A-62 222 728

## Description

La présente invention est relative à un dispositif de distribution de signaux vidéo et/ou audio, provenant de sources séparées vers plusieurs récepteurs distincts, répartis notamment dans les pièces d'une habitation domestique ou entre des postes localisés dans une même enceinte mais disposés en des endroits différents à l'intérieur de celle-ci.

L'invention vise notamment à assurer le transfert des signaux à travers les moyens de liaison déjà existants entre l'antenne réceptrice habituelle desservant l'habitation considérée et les différents postes de visualisation, constitués par des boîtiers répartiteurs et des câbles coaxiaux, en évitant la modification du câblage déjà en place.

On sait que, de façon de plus en plus fréquente, chaque habitation domestique comporte plusieurs postes récepteurs de télévision, répartis dans diverses pièces (salon, chambre, locaux divers...) de cette habitation. En outre, se multiplie actuellement le nombre des appareils vidéo ou de sources d'images de nature diverse dont dispose chaque usager, du genre magnétoscopes, récepteurs d'émissions relayées par satellite, sélecteurs d'abonnés de réseaux câblés, décodeurs de programmes cryptés, vidéodisques, camescopes, etc...

Dans ces conditions, on conçoit qu'il soit particulièrement intéressant de pouvoir distribuer les images ainsi disponibles, reçues dans une des pièces de l'habitation pour les transmettre de toute manière souhaitée aux divers récepteurs situés dans d'autres pièces de cette habitation, à partir de l'un quelconque de ces récepteurs, en permettant leur sélection à la demande et leur distribution selon toutes les combinaisons souhaitées.

Notamment, l'invention permet de distribuer vers les divers récepteurs précités, en complément des signaux provenant d'une antenne réceptrice classique, d'autres signaux vidéo et/ou audio, disponibles dans une pièce donnée de l'habitation, par exemple sur un récepteur d'émissions relayées par satellite, voire provenant d'autres sources telles par exemple qu'un lecteur de disques optiques, la distribution de ces signaux s'effectuant sans altérer de façon significative leurs qualités, en utilisant directement les câbles coaxiaux déjà en place, et en même temps de faire transiter en sens inverse par ces mêmes moyens de connexion, des signaux de télécommande et/ou les ordres de commutation appropriés.

On connaît déjà dans la technique des systèmes qui permettent de commuter différentes sources de signaux vidéo et/ou audio vers plusieurs appareils distincts, de tels systèmes pouvant en outre véhiculer d'autres signaux, en particulier de télécommande à partir d'un émetteur de rayonnements infrarouges. De même, on connaît déjà des réalisations dans lesquelles on utilise le réseau de distribution des signaux recueillis par une antenne de réception pour réaliser des liaisons vidéo et/ou audio supplémentaires. Toutefois, dans ces réalisations, il est prévu de moduler ces signaux avant leur transmission par le réseau, en utilisant le cas échéant un circuit de transposition en tête d'installation.

Le EP-A- 0 326 205 illustre une réalisation de ce genre où des signaux provenant de sources vidéo distinctes sont modulés avant d'être transmis par un câble coaxial supplémentaire vers une tête de distribution où ils se mélangent avec ceux qui proviennent de l'antenne de réception, le système comportant un circuit de contrôle qui recherche, dans un intervalle autorisé, une ou plusieurs fréquences libres et commande en fonction de celles-ci la modulation des signaux à transmettre.

Un système analogue a été décrit dans un compte rendu du 151e colloque international de télévision qui s'est tenu à Montreux du 11 au 17 juin 1987 (voir le rapport BROADCAST AND CATV - pages 165, 173 - J. HOFMANN "Cable, television, and the consumer electronic bus". Toutefois, là encore le système utilise deux câbles coaxiaux, respectivement pour l'aller et le retour des signaux vidéo qui sont préalablement modulés, les fréquences les plus basses étant utilisées pour la transmission des signaux complémentaires de télécommande.

Mais, dans ces réalisations connues, les signaux vidéo complémentaires distribués en se superposant avec les signaux à haute fréquence provenant de l'antenne, ne sont pas en bande de base, ce quine permet pas de les exploiter directement sur un récepteur situé à distance dans une autre pièce de l'habitation, mais exigent au contraire des étapes de modulation et de démodulation successives qui entraînent une baisse de la qualité des signaux et entraînent également une complication certaine des circuits nécessaires.

La présente invention permet d'éviter ces inconvénients en permettant de distribuer sur les câbles coaxiaux qui reçoivent normalement les signaux à haute fréquence provenant d'une antenne de réception classique, des signaux vidéo en bande de base, le cas échéant des signaux audio éventuellement modulés en fréquence, des signaux de commutation provenant de boîtiers de télécommande à infrarouge, et une tension d'alimentation de divers circuits, l'ensemble de ces signaux occupant les fréquences les plus basses, sans interférer en conséquence avec les signaux à haute fréquence reçus de l'antenne et sans risque dégradation de ces signaux.

A cet effet, le dispositif considéré, destiné à être monté dans une installation comportant un récepteur de télévision principal, éventuellement couplé à un magnétoscope, une antenne de réception de signaux vidéo et/ou audio, associée à un répartiteur pour transmettre ces signaux au récepteur principal via le cas échéant le magnétoscope par l'intermédiaire d'un câble coaxial de liaison et vers au moins un récepteur de télévision auxiliaire, localement séparé du récepteur principal, et au moins une source complémentaire de signaux vidéo en bande de base et/ou de signaux audio, provenant de sources indépendantes de l'antenne de réception, se caractérise en ce qu'il comporte un boîtier distributeur recevant les signaux d'antenne pour les transmettre au récepteur principal directement ou à travers le magnétoscope ainsi que les signaux vidéo en bande de base et/ou audio reçus des sources indépendantes, un boîtier dérivateur monté sur le câble coaxial de liaison entre l'antenne et le boîtier distributeur pour éviter la remontée vers l'antenne des signaux reçus de ce boîtier distributeur et à permettre en revanche leur transmission vers le récepteur auxiliaire à travers un câble coaxial complémentaire et un boîtier d'arrivée, celui-ci recevant les signaux du boîtier distributeur à travers le boîtier dérivateur pour les transmettre au récepteur auxiliaire.

Le dispositif permet ainsi d'utiliser le câble coaxial existant nécessairement entre l'antenne de réception dont est munie l'habitation concernée et le récepteur principal, éventuellement à travers le magnétoscope, afin de renvoyer vers le récepteur auxiliaire les signaux reçus par celui-ci aussi bien que des sources complémentaires raccordées au boîtier distributeur.

Selon le cas, les sources complémentaires peuvent consister en une installation de réception, comportant une antenne spéciale de réception d'émissions relayées par satellite, et un coffret récepteur délivrant un signal vidéo en bande de base, en un lecteur de disques optiques ou disques laser, en un boîtier de connexion ou de sélection avec un réseau câblé, un camescope, un autre magnétoscope ...

Selon une caractéristique particulière du dispositif considéré, le boîtier distributeur d'une part, le boîtier d'arrivée d'autre part, comportent respectivement un diffuseur et un récepteur d'ondes infrarouges, aptes à transmettre ou à recevoir des signaux de commande provenant d'une télécommande appropriée, disposée au voisinage du boîtier d'arrivée pour commander les sources complémentaires connectées au boîtier distributeur.

Selon une autre caractéristique de l'invention, chacun des boîtiers distributeur, dérivateur et d'arrivée comporte un filtre d'aiguillage, entrée-sortie, comprenant une voie centrale reliée d'une part à la voie haute fréquence (HF) par l'intermédiaire d'un filtre passe-haut et à la voie basse fréquence (BF) par l'intermédiaire d'un filtre passe-bas.

Dans un mode de réalisation préféré de l'invention, le boîtier émetteur comporte avant le filtre d'aiguillage, deux commutateurs à au moins deux positions, l'un de ces commutateurs permettant au récepteur principal de sélectionner, en plus des signaux reçus de l'antenne, une parmi les sources complémentaires, l'autre commutateur étant prévu pour diriger les signaux issus d'une de ces sources complémentaires vers un circuit de traitement qui module les signaux audio en fréquence et les additionne aux signaux vidéo, les signaux résultant étant transmis à travers le filtre d'aiguillage vers le boîtier d'arrivée, via le boîtier dérivateur.

Dans le même mode de réalisation, le boîtier dérivateur comporte trois filtres dont deux sont des filtres passe-haut, montés parallèlement et raccordés aux sorties du répartiteur d'antenne, respectivement vers le récepteur principal et le récepteur auxiliaire, ces deux filtres étant réunis en série par un filtre passe-bas, de telle sorte que les signaux vidéo en bande de base et/ou audio modulés en fréquence, renvoyés vers le boîtier dérivateur par le boîtier distributeur à travers le câble de liaison coaxial, ne puissent atteindre le répartiteur mais soient déviés vers le boîtier d'arrivée à travers le filtre passe-bas.

Enfin et toujours dans le même mode de réalisation, le boîtier d'arrivée comporte, après le filtre d'aiguillage, un circuit de séparation des signaux vidéo et audio et de démodulation des signaux audio, dont la sortie est réunie au récepteur auxiliaire.

D'autres caractéristiques d'un dispositif de distribution vidéo et/ou audio entre plusieurs récepteurs apparaîtront encore à travers la description qui suit d'un exemple de réalisation donné à titre indicatif et non limitatif, en référence aux dessins annexés sur lesquels :
- La Figure 1 est un schéma général de montage d'une installation mettant en oeuvre le dispositif selon l'invention ;
- Les Figures 2, 3 et 4 sont des vues schématiques illustrant la structure générale des boîtiers distributeur, dérivateur et d'arrivée, entrant dans le dispositif considéré.

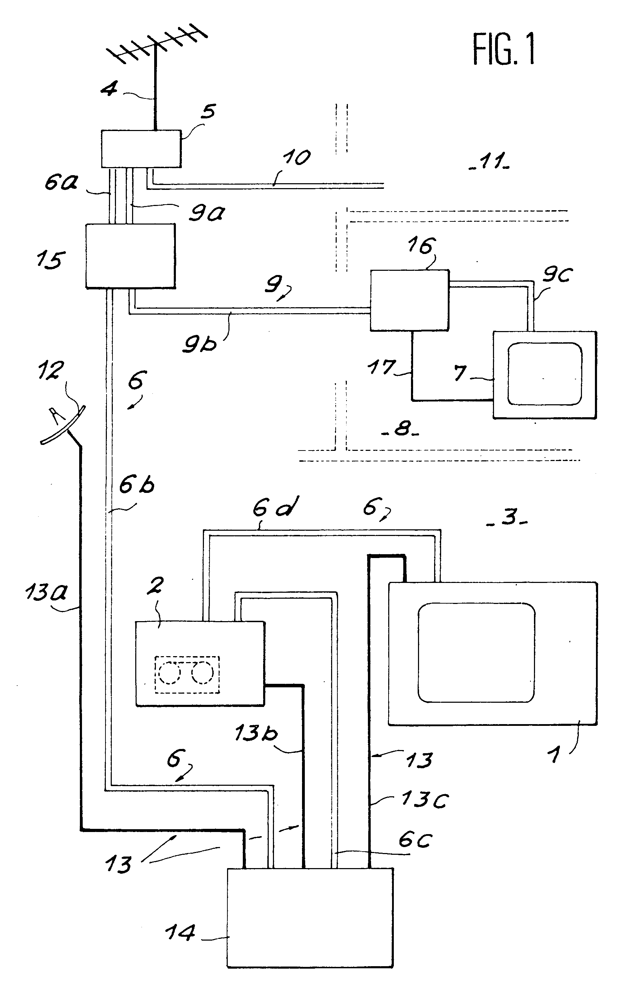

Sur la Figure 1, la référence 1 désigne un récepteur de télévision principal d'un genre en lui-même connu, de préférence associé à un magnétoscope 2. L'ensemble est situé dans une pièce ou un local quelconque d'une habitation domestique ou autre, munie de façon en elle-même classique, d'une antenne de réception 4 fixée sur le toit de cette habitation recevant des signaux vidéo et/ou audio en bandes VHF ou UHF. A l'antenne 4 est couplé un boîtier répartiteur 5, permettant de distribuer en parallèle les signaux à haute fréquence reçus, notamment vers le récepteur principal 1 par l'intermédiaire d'un câble coaxial 6 et également vers un récepteur de télévision auxiliaire 7 disposé dans une pièce 8 séparée de la pièce 3 contenant le récepteur principal, au moyen d'un autre câble coaxial 9. Sur le dessin, on a représenté un troisième câble coaxial 10, relié au répartiteur 5 et apte à nouveau à transmettre les mêmes signaux à haute fréquence à un autre récepteur auxiliaire (cette fois non représenté sur le dessin), situé dans une troisième pièce 11 de l'habitation, distincte des pièces 3 et 8 précédentes.

De façon usuelle, l'installation ainsi réalisée peut être raccordée à une (ou plusieurs) source complémentaire fournissant des images vidéo en bande de base, voire des signaux audio accompagnant les signaux vidéo, une telle source étant schématiquement représentée sur la Figure 1 sous la référence 12, illustrant une installation annexe, comportant une antenne spéciale de réception d'émissions relayées par satellite, couplée de manière connue à un coffret récepteur, délivrant un signal vidéo en bande de base. Bien entendu, d'autres sources de signaux de ce genre pourraient être envisagées en substitution ou en complément de la source 12 du genre lecteur de disques optique, camescope, magnétoscope additionnel, boîtier de sélection d'images provenant d'un réseau câblé, etc... Les signaux correspondants sont transmis par une liaison électrique appropriée 13, respectivement au boîtier distributeur 14 dont le rôle et la structure seront définis plus loin, cette liaison reliant ensuite celui-ci au magnétoscope et également au récepteur principal. Avantageusement, la liaison 13 est réalisée sous la forme de câbles multiples, susceptibles de véhiculer au moins un signal vidéo et un, voire deux signaux audio, éventuellement un signal de commutation.

Conformément à l'invention, l'installation ainsi réalisée vise à transmettre les signaux vidéo et/ou audio provenant de la source auxiliaire 12 ou du magnétoscope 2 vers le récepteur auxiliaire 7, en utilisant notamment les câbles coaxiaux de liaison déjà existants, en particulier les câbles 6 et 9 raccordant les diverses parties de l'installation au répartiteur d'antenne 5, ceci sans perturber la réception des signaux haute fréquence provenant de cette dernière et circulant sur ces câbles en sens inverse des signaux précédents.

A cet effet, l'installation comporte un boîtier distributeur 14 monté dans la pièce 3 au voisinage du récepteur principal 1 et du magnétoscope 2, un boîtier dérivateur 15 évitant la remontée vers le répartiteur 5 des signaux provenant du boîtier émetteur 14 et les renvoyant vers le récepteur auxiliaire 7, et enfin un boîtier d'arrivée 16, monté entre ce récepteur auxiliaire et le boîtier 15. Les câbles coaxiaux 6 et 9 se subdivisent en portions respectivement 6a, 6b, 6c et 6d, entre successivement le répartiteur 5, le coupleur-séparateur 15, le boîtier distributeur 14, le magnétoscope 2 et le récepteur principal 1 d'une part et 9a, 9b et 9c entre le répartiteur 5, le boîtier dérivateur 15, le boîtier d'arrivée 16 et enfin le récepteur auxiliaire 7. Une liaison filaire additionnelle 17 est également prévue entre le boîtier récepteur 16 et le téléviseur auxiliaire 7 pour l'acheminement à celui-ci des signaux en bande de base et/ou des signaux audio reçus de la source 12. De même, la liaison 13 entre la source 12 et le récepteur principal 1 puis le magnétoscope 2, se subdivise, via le boîtier distributeur 14 en sections 13a d'une part, 13b et 13c d'autre part comme représenté sur le dessin.

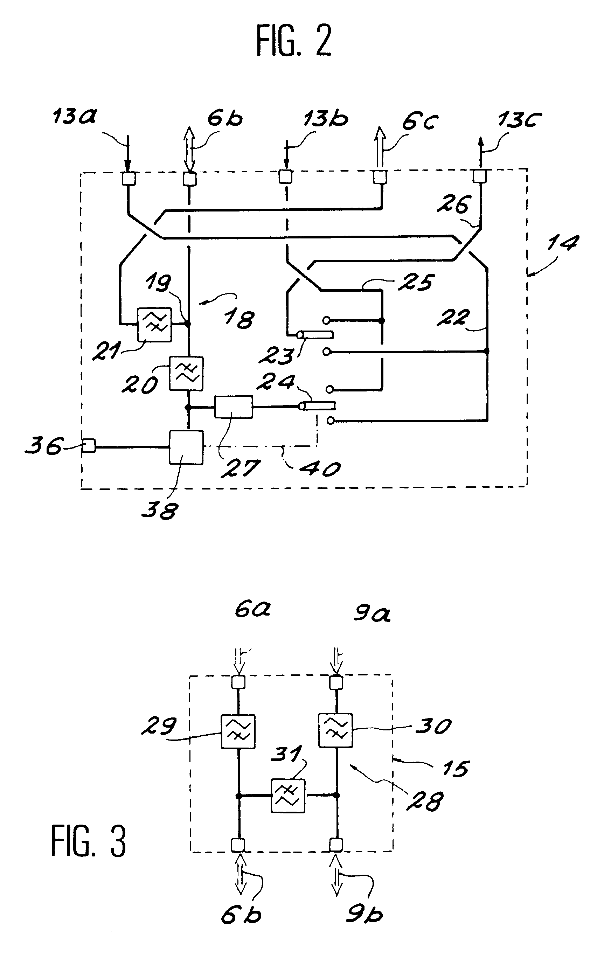

La Figure 2 illustre avec plus de détail la structure du boîtier distributeur 14 auquel se raccorde les parties de câbles coaxiaux 6b et 6c d'une part, les liaisons par fil 13a, 13b et 13c d'autre part. Ce boîtier comporte un filtre d'aiguillage 18 avec une voie centrale 19 raccordée au câble coaxial 6b et à deux filtres respectivement 20 et 21 dont l'un 20 est un filtre passe-bas et dont l'autre 21 est un filtre passe-haut, la coupure de ces filtres étant telle que le premier ne laisse passer que des signaux vidéo en bande de base ou des signaux audio modulés en fréquence, le cas échéant des signaux de report de télécommande infrarouges dont la fréquence est au plus égale à 10 ou 11 MHz, tandis que le second ne laisse passer pour sa part que des signaux à haute fréquence, celle-ci étant comprise entre 40 et 900 MHz.

Le fil de liaison 13a de raccordement du boîtier distributeur 14 avec la source auxiliaire 12 comprend à l'intérieur de ce boîtier une connexion 22 avec deux commutateurs 23 et 24, à positions indépendantes, dont les contacts mobiles peuvent occuper l'une ou l'autre de deux ou plus positions, ces commutateurs étant associés à des liaisons, respectivement 25 et 26 avec les sorties 13b et 13c du boîtier qui raccordent celui-ci au magnétoscope 2 et au récepteur principal 1 (voir Figure 1).

Lorsque le commutateur 23 est dans sa position haute, le récepteur principal 1 reçoit par les liaisons 13c et 26, puis 25 et 13b les signaux audio et vidéo issus du magnétoscope 2. A l'inverse, lorsque le commutateur 23 est dans sa position basse, le récepteur principal reçoit, par les liaisons 13c et 26, puis 22 et 13a, les signaux audio et vidéo issus d'une source complémentaire, par exemple ceux qui proviennent de l'installation de réception d'une émission relayée par satellite, constituant la source 12. De même, lorsque le commutateur 24 est dans sa position haute, les signaux audio et vidéo provenant du magnétoscope 2 sont envoyés à un circuit de traitement 27 à travers les liaisons 25 et 13b ; dans sa position basse, ce même circuit 27 reçoit les signaux audio et vidéo issus de l'antenne 12 à travers les liaisons 22 et 13a. Dans ce circuit 27, les signaux audio sont modulés en fréquence et additionnés aux signaux vidéo en bande de base.

Le signal résultant produit franchit le filtre 20 mais est arrêté par le filtre 21 de telle sorte qu'il est renvoyé par le câble coaxial 6b en direction du boîtier dérivateur 15. Ce signal, dont la fréquence est comprise entre 20 Hz et 6 MHz, en tous cas inférieure à 20 MHz, ne peut donc sur le câble coaxial 6b interférer et perturber les signaux d'antenne circulant sur ce câble en sens inverse, en direction du boîtier distributeur 14.

Dans le boîtier dérivateur 15 illustré sur la Figure 3, les signaux précédents arrivent au filtre d'aiguillage 28, dans lequel deux filtres passe-haut respectivement 29 et 30 interdisent la remontée vers l'antenne des signaux produits, en particulier sur les sections de câbles coaxiaux 6a et 6b. En revanche, après franchissement d'un filtre passe-bas 31 dans le filtre d'aiguillage 28, les signaux vidéo et audio peuvent être aisément transmis sur la partie de câble 9b vers le récepteur auxiliaire 7, leur fréquence inférieure à 20 MHz évitant toute interférence avec les signaux haute fréquence provenant de l'antenne par le câble 9a et également transmis vers le récepteur 7 par le câble 9b.

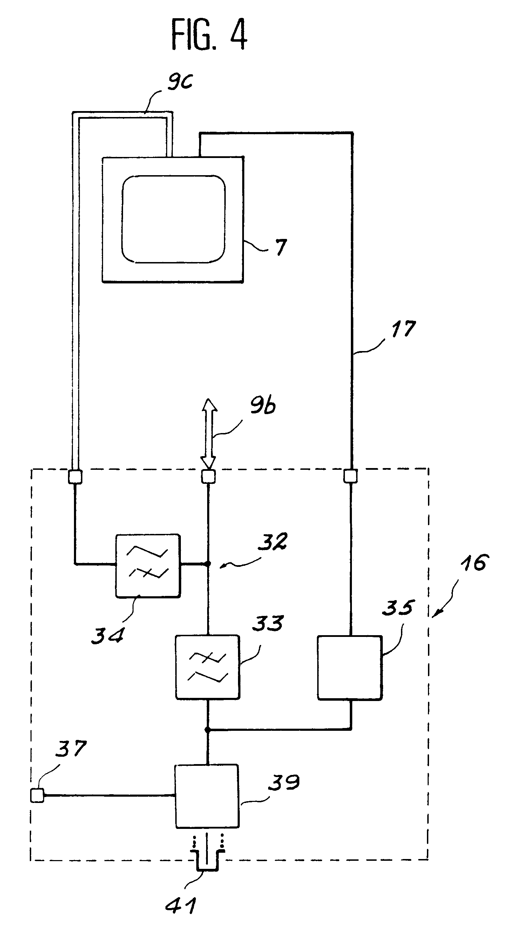

La Figure 4 illustre la structure du boîtier d'arrivée 16 où l'on retrouve, comme dans le boîtier distributeur un filtre d'aiguillage 32 avec respectivement un filtre passe-bas 33 et un filtre passe-haut 34. La sortie de ce dernier est réunie au câble coaxial 9c et par celui-ci au récepteur auxiliaire 7, tandis que la sortie du filtre passe-bas 33 est réunie à la liaison 17 par l'intermédiaire du circuit 35 de séparation du signal vidéo et de la (ou des) porteuse(s) du (ou des) signal (signaux) audio, ainsi que de démodulation de ces derniers.

En d'autres termes, le contact 23 de l'interrupteur est de préférence commandé localement par un bouton (non représenté) situé en façade du boîtier ditributeur 14, et permet ainsi de choisir entre les signaux vidéo provenant soit du magnétoscope 2, soit de la source auxiliaire ou installation 12, alimentant le récepteur principal 1. Le contact 24, commandé depuis un bouton 41 situé en façade du boîtier d'arrivée 16, agit de même pour l'alimentation du récepteur auxiliaire 7, via les boîtiers 15 et 16.

Les boîtiers distributeur 14 et d'arrivée 16 comportent respectivement un diffuseur infrarouge 36 et un récepteur 37 permettant de transmettre ou de recevoir des ordres de télécommande à partir d'un boîtier ou coffret approprié (non représenté), les signaux émis de ce dernier étant respectivement modulés et démodulés dans des circuits 39 et 38. Ces circuits 38 et 39 permettent, en utilisant la même sous porteuse des signaux, de transmettre aussi les ordres reçus par suite d'une action sur le bouton 41 au commutateur 24. De même, il est possible de transmettre les signaux de télécommande du magnétoscope 2 par exemple et/ou de commander celui-ci à partir de la pièce dans laquelle est disposé le boîtier d'arrivée 16.

On réalise ainsi un dispositif de distribution de signaux entre plusieurs récepteurs d'une même installation domestique, qui utilise les câbles coaxiaux déjà installés, les filtres d'aiguillage utilisés permettant d'éviter le retour vers l'antenne réceptrice des signaux provenant soit de la source auxiliaire, soit du coffret de télécommande. Les filtres sont calculés de manière à assurer une impédance de charge convenable dans les bandes de fréquence utiles, les voies de liaison entre les filtres passe-haut et passe-bas dans chaque filtre d'aiguillage étant constituées d'élements de câbles coaxiaux. Ces filtres permettent par ailleurs une atténuation limitée, voire insignifiante, des signaux dans les bandes de fréquence concernées, en permettant de conserver le même rapport signal/bruit pour les signaux d'antenne, ce qui évite l'emploi d'amplificateur pour éliminer les images neigeuses. Enfin, les filtres proposés introduisent une atténuation importante entre les voies HF et BF de manière à empêcher que les signaux vidéo en bande de base ainsi que les sous-porteuses des signaux audio et de télécommande ne remontent dans l'antenne, en rayonnant des signaux parasites gênants pour le voisinage.

Bien entendu, il va de soi que l'invention ne se limite pas à l'exemple de réalisation plus spécialement décrit et représenté ci-dessus ; elle en embrasse au contraire toutes les variantes.

## Revendications

1. Dispositif de distribution de signaux vidéo et/ou audio entre plusieurs récepteurs, destiné à être monté dans une installation comportant un récepteur de télévision principal (1), éventuellement couplé à un magnétoscope (2), une antenne de réception de signaux vidéo et/ou audio (4) usuelle, associée à un répartiteur (5) pour transmettre ces signaux au récepteur principal via le cas échéant le magnétoscope par l'intermédiaire d'un câble coaxial de liaison (6) et vers au moins un récepteur de télévision auxiliaire (7), localement séparé du récepteur principal, et au moins une source complémentaire (12) de signaux vidéo en bande de base et/ou de signaux audio, indépendante de l'antenne de réception, caractérisé en ce qu'il comporte un boîtier distributeur (14) recevant les signaux d'antenne pour les transmettre au récepteur principal directement ou à travers le magnétoscope ainsi que les signaux vidéo en bande de base et/ou audio reçus des sources indépendantes, un boîtier dérivateur (15) monté sur le câble coaxial de liaison entre l'antenne et le boîtier distributeur pour éviter la remontée vers l'antenne des signaux reçus de ce boîtier distributeur et à permettre en revanche leur transmission vers le récepteur auxiliaire à travers un câble coaxial complémentaire (9) et un boîtier d'arrivée (16), celui-ci recevant les signaux du boîtier distributeur à travers le boîtier dérivateur pour les transmettre au récepteur auxiliaire.

2. Dispositif selon la revendication 1, caractérisé en ce que les sources complémentaires consistent notamment en une antenne spéciale de réception d'émissions relayées par satellite, en un lecteur de disques optiques, en un boîtier de connexion ou de sélection avec un réseau câblé, un camescope, un autre magnétoscope ...

3. Dispositif selon l'une des revendications 1 ou 2, caractérisé en ce que le boîtier distributeur (14) d'une part, le boîtier d'arrivée (16) d'autre part, comportent respectivement un diffuseur (36) et un récepteur (37) d'ondes infrarouges, aptes à transmettre ou à recevoir des signaux de commande provenant d'une télécommande appropriée, disposée au voisinage du boîtier d'arrivée pour commander les sources complémentaires (12).

4. Dispositif selon l'une quelconque des revendications 1 à 3, caractérisé en ce que chacun des boîtiers distributeur (14), dérivateur (15) et d'arrivée (16) comporte un filtre d'aiguillage entrée-sortie (18, 28, 32), comprenant une voie centrale reliée d'une part à la voie haute fréquence (HF), qui correspond aux liaisons de ladite antenne de réception (4) vers les récepteurs de l'installation, par l'intermédiaire d'un filtre passe-haut et à la voie basse fréquence (BF), qui correspond aux liaisons en bande de base et/ou audio, par l'intermédiaire d'un filtre passe-bas.

5. Dipositif selon la revendication 4, caractérisé en ce que le boîtier distributeur (14) comporte avant le filtre d'aiguillage (18), deux commutateurs (23,24) à au moins deux positions, l'un de ces commutateurs (23) permettant au récepteur principal de sélectionner, en plus des signaux reçus de l'antenne (4), une parmi les sources complémentaires (12), l'autre commutateur (24) étant prévu pour diriger les signaux issus d'une de ces sources complémentaires vers un circuit de traitement (27) qui module les signaux audio en fréquence et les additionne aux signaux vidéo, les signaux résultant étant transmis à travers le filtre d'aiguillage vers le boîtier d'arrivée (16), via le boîtier dérivateur (15).

6. Dipositif selon la revendication 4, caractérisé en ce que le boîtier dérivateur (15) comporte trois filtres (29, 30, 31) dont deux (29, 30) sont des filtres passe-haut, montés parallèlement et raccordés aux sorties du répartiteur d'antenne (5), respectivement vers le récepteur principal (1) et le récepteur auxiliaire (7), ces deux filtres étant réunis en série par un filtre passe-bas (31), de telle sorte que les signaux vidéo en bande de base et/ou audio modulés en fréquence, renvoyés vers le boîtier dérivateur (15) par le boîtier distributeur (14) à travers le câble de liaison coaxial (6), ne puissent atteindre le répartiteur mais soient déviés vers le boîtier d'arrivée (16) à travers le filtre passe-bas.

7. Dispositif selon la revendication 4, caractérisé en ce que le boîtier récepteur (16) comporte, après le filtre d'aiguillage (32), un circuit (35) de séparation des signaux vidéo en bande de base et/ou audio, et de démodulation des signaux audio, dont la sortie est réunie au récepteur auxiliaire (7).

## Claims

1. Device for the distribution of video and/or audio signal between several receivers, intended to be mounted in an installation comprising a main television receiver (1), possibly connected to a magnetoscope (2), a conventional aerial for receiving video and/or audio signals (4), associated with a distributor (5) for transmitting these signals to the main receiver via, if necessary, the magnetoscope through the intermediary of a coaxial connection cable (6) and to at least one auxiliary television receiver (7), in a location separate from the main receiver, and at least one complementary source (12) of basic band video signals and/or of audio signals, independent of the receiving aerial, characterised in that it comprises a distributor box (14) receiving the aerial signals in order to transmit them to the main receiver directly or through the magnetoscope as well as the basic band video and/or audio signals received from independent sources, a diverting box (15) mounted on the coaxial connection cable between the aerial and the distributor box in order to prevent the passage to the aerial of the signals received from this distributor box and on the other hand to allow their transmission to the auxiliary receiver via a complementary coaxial cable (9) and an admission box (16), the latter receiving the signals from the distributor box via the diverter box in order to transmit them to the auxiliary receiver.

2. Device according to Claim 1, characterised in that the complementary sources consist in particular of a special aerial for receiving transmissions relayed by satellite, of an optical disc reader, of a connection or selection box with a cabled network, a cameoscope, another magnetoscope ....

3. Device according to one of Claims 1 or 2, characterised in that the distributor box (14), on the one hand, the admission box (16) on the other hand, respectively comprise a diffuser (36) and a receiver (37) for infra-red waves, able to transmit or to receive control signals coming from an appropriate remote control, disposed in the vicinity of the admission box in order to control the complementary sources (12).

4. Device according to one of Claims 1 to 3, characterised in that each of the following boxes, distributor box (14), diverter box (15) and admission box (16), comprises an input/output routing filter (18, 28, 32), comprising a central channel connected on the one hand to the high frequency (HF) channel, which corresponds to the connections of said receiving aerial (4) to the receivers of the installation, through the intermediary of a high-pass filter and to the low frequency (LF) channel, which corresponds to the basic band and/or audio connections, through the intermediary of a low-pass filter.

5. Device according to Claim 4, characterised in that the distributor box (14) comprises in front of the routing filter (18), two switches (23, 24) with at least two positions, one of these switches (23) allowing the main receiver to select, in addition to the signals received from the aerial (4), one from the complementary sources (12), the other switch (24) being provided for directing the signals coming from one of these complementary sources to a processing circuit (27) which modulates the frequency of the audio signals and adds them to the video signals, the resulting signals being transmitted via the routing filter to the admission box (16), via the diverter box (15).

6. Device according to Claim 4, characterised in that the diverter box (15) comprises three filters (29, 30, 31) two of which (29, 30) are high-pass filters, mounted in parallel and connected to the outputs of the aerial distributor (5), respectively to the main receiver (1) and the auxiliary receiver (7), these two filters being combined in series by a low-pass filter (31), so that the basic band video and/or audio signals of modulated frequency, returned to the diverter box (15) by the distributor box (14) via the coaxial connection cable (6), are not able to reach the distributor but are diverted to the admission box (16), by way of the low-pass filter.

7. Device according to Claim 4, characterised in that the receiver box (16) comprises, after the routing filter (32), a circuit (35) for the separation of the basic band video and/or audio signals and for the demodulation of the audio signals, the output of which is connected to the auxiliary receiver (7).

## Patentansprüche

1. Vorrichtung zum Verteilen von Video- und/oder Audiosignalen zwischen mehreren Empfängern, die zur Montage in einer Anlage mit einem Hauptfernsehempfänger (1), der möglicherweise mit einem Videorecorder (2) gekoppelt ist, einer üblichen Antenne (4) zum Empfang von Video- und/oder Audiosignalen, die einem Verteiler (5) zur Übertragung dieser Signale zum Hauptempfänger gegebenenfalls durch den Videorecorder über ein koaxiales Verbindungskabel (6) sowie zu wenigstens einem Hilfsfernsehempfänger (7) zugeordnet ist, der von dem Hauptempfänger lokal getrennt ist, sowie wenigstens einer komplementären, von der Empfangsantenne unabhängigen Quelle (12) von Videosignalen im Basisband und/oder Audiosignalen bestimmt ist, dadurch gekennzeichnet, daß sie ein Verteilergehäuse (14), das die Antennensignale empfängt, um sie wie die von den unabhängigen Quellen empfangenen Videosignale im Basisband und/oder die Audiosignale zu dem Hauptempfänger direkt oder über den Videorecoder zu übertragen, ein Nebenschlußgehäuse (15), das an dem koaxialen Verbindungskabel zwischen der Antenne und dem Verteilergehäuse montiert ist, um zu vermeiden, daß die von diesem Verteilergehäuse empfangenen Signale wieder zur Antenne gelangen, und dagegen ihre Übertragung zu dem Hilfsempfänger über ein komplementäres koaxiales Kabel (9) zu ermöglichen, sowie ein Eingangsgehäuse (16) aufweist, wobei dieses die Signale des Verteilergehäuses über das Nebenschlußgehäuse empfängt, um sie zu dem Hilfsempfänger zu übertragen.

2. Vorrichtung nach Anspruch 1, dadurch gekennzeichnet, daß die komplementären Quellen insbesondere aus einer Spezialantenne zum Empfang von über Satellit übertragenen Sendungen, aus einem Leser für Optikplatten, einem Gehäuse zum Anschluß an oder zur Auswahl aus einem verkabelten Netz, einem Camcorder, einem weiteren Videorecorder ... bestehen.

3. Vorrichtung nach einem der Ansprüche 1 oder 2, dadurch gekennzeichnet, daß das Verteilergehäuse (14) einerseits und das Eingangsgehäuse (16) andererseits jeweils einen Diffusor (36) und einen Empfänger (37) für Infrarotwellen aufweisen, die zur Übertragung oder zum Empfang von Steuersignalen geeignet sind, die von einer geeigneten Fernsteuerung kommen, die in der Nachbarschaft des Eingangsgehäuses zur Steuerung der komplementären Quellen (12) angeordnet ist.

4. Vorrichtung nach einem der Ansprüche 1 bis 3, dadurch gekennzeichnet, daß jedes der Verteiler- (14), Nebenschluß- (15) und Eingangsgehäuse (16) ein Eingangs-Ausgangs-Verzweigungsfilter (18, 28, 32) mit einem zentralen Kanal aufweist, der einerseits mit dem Hochfrequenzkanal (HF), der den Verbindungen der Empfangsantenne (4) zu den Empfängern der Anlage entspricht, über ein Hochpaßfilter und mit dem Niederfrequenzkanal (BF), der den Verbindungen im Basis- und/oder Audioband entspricht, über ein Tiefpaßfilter verbunden ist.

5. Vorrichtung nach Anspruch 4, dadurch gekennzeichnet, daß das Verteilergehäuse (14) vor dem Verzweigungsfilter (14) zwei Umschalter (23, 24) mit wenigstens zwei Positionen aufweist, wobei einer dieser Umschalter (23) es dem Hauptempfänger ermöglicht, außer den von der Antenne (4) empfangenen Signalen eine unter den komplementären Quellen (12) auszuwählen, wobei der andere Umschalter (24) dazu vorgesehen ist, die aus einer dieser komplementären Quellen ausgegebenen Signale zu einer Verarbeitungsschaltung (27) zu leiten, die die Audiosignale frequenzmoduliert und sie zu den Videosignalen addiert, wobei die resultierenden Signale durch das Verzweigungsfilter über das Nebenschlußgehäuse (15) zu dem Eingangsgehäuse (15) übertragen werden.

6. Vorrichtung nach Anspruch 4, dadurch gekennzeichnet, daß das Nebenschlußgehäuse (15) drei Filter (29, 30, 31) aufweist, von denen zwei (29, 30) Hochpaßfilter sind, die parallelgeschaltet und an die Ausgänge des Antennenverteilers (5) angeschlossen sind, jeweils zu dem Hauptempfänger (1) und dem Hilfsempfänger (7), wobei diese beiden Filter in Reihe durch ein Tiefpaßfilter (31) vereinigt sind, so daß die frequenzmodulierten Videosignale im Basisband und/oder die Audiosignale, die von dem Verteilergehäuse (14) über das koaxiale Verbindungskabel (6) zu dem Nebenschlußgehäuse (15) zurückgeschickt werden, den Verteiler nicht erreichen können, sondern über den Tiefpaßfilter zu dem Eingangsgehäuse (16) abgeleitet werden.

7. Vorrichtung nach Anspruch 4, dadurch gekennzeichnet, daß das Empfangsgehäuse (16) nach dem Verzweigungsfilter (32) eine Schaltung (35) zum Trennen der Videosignale im Basisband und/oder der Audiosignale und zur Demodulation der Audiosignale aufweist, deren Ausgang mit dem Hilfsempfänger (7) vereinigt ist.
